# EUROPÄISCHE PATENTSCHRIFT

(11) **EP 1 453 679 B1**
(45) Veröffentlichungstag und Bekanntmachung des Hinweises auf die Patenterteilung: **18.11.2009**
(21) Anmeldenummer: 02777233.4
(22) Anmeldetag: 25.09.2002
(51) Int. Cl.: B41F 33/00, B41F 31/00, B41F 31/02

(54) **VERPACKUNGSDRUCKMASCHINE MIT EINGEBAUTER AUTOMATISCHER VERGLEICHSFUNKTION ZWISCHEN DRUCK- UND SOLLBILD**
PACKAGING MACHINE WITH A BUILT-IN AUTOMATIC COMPARISON FUNCTION BETWEEN A PRINTED IMAGE AND A DESIRED IMAGE
MACHINE D'IMPRESSION D'EMBALLAGES A FONCTION DE COMPARAISON AUTOMATIQUE INTEGREE ENTRE L'IMAGE IMPRIMEE ET L'IMAGE THEORIQUE

(30) Priorität: 04.12.2001 DE 10159387
(43) Veröffentlichungstag der Anmeldung: 08.09.2004
(73) Patentinhaber: Windmöller & Hölscher KG, 49525 Lengerich (DE)
(72) Erfinder: PÖTTER, Dietmar, 49492 Westerkappeln (DE); KRÜMPELMANN, Martin, 49525 Lengerich (DE)
(86) Internationale Anmeldenummer: PCT/EP2002/010844
(87) Internationale Veröffentlichungsnummer: WO 2003/047865

(56) Entgegenhaltungen:
- EP-A- 0 404 088
- DE-A- 4 311 132
- NL-A- 8 602 109

## Beschreibung

Die Erfindung betrifft eine Verpackungsdruckmaschine mit zumindest einem Farbwerk, bei der das Druckbild (7) durch die Zufuhr geeigneter Farben und Farbmengen (31-34) nach einem Sollbild eingestellt wird.
Im Verpackungsdruck kommen vor allem Tief- und Flexodruckmaschinen zum Einsatz. Bei diesen Maschinen, welche oft mit einer Vielzahl von Farbwerken ausgestattet sind, ist es mit sehr großem Aufwand verbunden, bei einem Rüstvorgang die Farben so zu mischen und mit Verdünnungsmitteln zu versehen, dass das gewünschte Druckbild zustande kommt.
Auch während eines laufenden Druckprozesses kommt es zu ungewünschten Veränderungen des Druckbildes, die durch Zuführung geeigneter Farbe korrigiert werden müssen.
Aufgrund dieser Umstände werden von Farbherstellern oder Farbmischvorrichtungen Farben hergestellt oder gemischt, welche der Druckmaschine zugeführt werden und das Druckbild korrigieren.
Parameter bei der Herstellung oder Mischung der Farbe sind unter anderem:
- Auswahl der Farben beziehungsweise Farbpigmente.
- Mischungsverhältnis verschiedener Farben beziehungsweise Farbpigmente.
- Zusatz von Bindemitteln beziehungsweise sogenanntem Verschnitt, mit dem Ziel die Konzentration der Farbpigmente in der Farbe zu senken, ohne die Viskosität der Farbe stark zu verändern.
- Beimischung von schwarzen oder grauen Pigmenten.

Zur Bestimmung der notwendigen Farbe und Farbmenge wird das Druckbild während des Rüst- und Druckvorganges vom Maschinenbediener überwacht. Bei dieser Arbeit ist der Maschinenbediener in der Regel auf die subjektive Beurteilung des Druckbildes mit seinen Augen angewiesen. In Ausnahmefällen verwendet der Maschinenbediener tragbare Geräte, welche bestimmte, besonders kritische Bereiche des Druckbildes spektral untersuchen.
Aufgrund der Untersuchungsergebnisse werden durch die oben erwähnten Maßnahmen die spektralen Eigenschaften der Farbe, welche zur Korrektur des Druckbildes verwendet wird, in geeigneter Weise eingestellt.

Die Einstellung beziehungsweise Überwachung des Druckbildes ist aufwändig und oft mit Fehlern behaftet.

Die DE 43 11 132 A1 schlägt eine Druckmaschine vor, bei der das Druckbild mit Überwachungsvorrichtungen aufgezeichnet wird. Es erfolgt ein Vergleich der so ermittelten Messwerte, die die Farbdichte betreffen, mit einem Sollwert. Eine Rechenvorrichtung errechnet Maßnahmen zur Angleichung des Istwertes an den Sollwert, die in einer Änderung des Mischungsverhältnisses zwischen Farbpigmenten und Lösemitteln bestehen.

Bei der Einstellung des Druckbildes besteht nach wie vor Verbesserungsbedarf. Dies gilt insbesondere für die Ermittlung der Menge und Zusammensetzung der bei Korrektur des Druckbildes benötigten Farbe.

Daher besteht die Aufgabe der vorliegenden Erfindung darin, eine Verpackungsdruckmaschine und ein Verfahren zum Betrieb einer solchen Maschine vorzuschlagen, welche die Ermittlung der Menge und Zusammensetzung der bei Korrektur des Druckbildes benötigten Farbe in zuverlässigerer Weise ermöglicht.

Die Aufgabe wird dadurch gelöst, dass zusätzlich vorgesehen werden:
- Vorrichtungen (41), mit welchen das Farbvolumen oder die Farbmasse der im Farbbehälter (13) der Druckmaschine noch enthaltenen, zusammengesetzten Farbe feststellbar und der Steuer- und Regeleinheit (8) übermittelbar ist,
- und daß die Steuer- und Regeleinheit (8) derart eingerichtet ist, dass sie diese Farbvolumen- oder die Farbmassewerte bei der Ermittlung der zur Korrektur des Druckbildes notwendigen Farbmenge berücksichtigt.

Durch die Erfindung kommen große Zeiteinsparungen für den Maschinenbediener zustande, da die genaue spektrale Untersuchung des Druckbildes zur Farbeinstellung bei laufender Druckbahn erfolgen kann. Die Steuer- und Regeleinrichtung der Druckmaschine gibt die Vergleichswerte der Außenwelt über Kommunikationsmittel, wie ein Display oder eine elektronische Schnittstelle, weiter. Alternativ dazu kann die Steuer- und Regeleinrichtung die Vergleichswerte auch selbst weiterverarbeiten. Insbesondere bei der Verwendung nur eines Farbwerks ist es möglich, auf eine zentrale Erfassung des Druckbildes zu verzichten und lediglich die Intensitätswerte des reflektierten Lichts auszuwerten. Ähnlich kann man vorgehen, wenn die Verpackungsdruckmaschine mehrere Farbwerke besitzt und nach jedem Farbwerk eine solche Vorrichtung zum Erfassen des Druckbildes vorgesehen ist.
Bei der Kontrolle des Druckbildes ist es vorteilhaft, das Druckbild mit einer Vorrichtung wie einer Digitalkamera zu erfassen, welche das Druckbild bereits in digitaler Form aufnimmt und an die Steuer- und Regeleinheit weitergibt.
Wenn die Steuer- und Regeleinheit die Farbmengen in der Druckmaschine beispielsweise mit einer Wiegevorrichtung überprüft, kann die Ermittlung der zur Korrektur benötigten Farbe zuverlässiger erfolgen. Alternativ dazu könnte der Farbverbrauch an der Maschine gemessen oder abgeschätzt beziehungsweise berechnet werden.

Auch die Aufzeichnung anderer physikalischer Kenngrößen der Farbe kann in diesem Zusammenhang hilfreich sein. So können die spektralen Eigenschaften der Farbe beispielsweise mit Einrichtungen zur Überprüfung ihrer Lichtabsorption oder -emission gemessen werden.
Auch bekannte Viskositätsmessverfahren können an der Maschine zum Einsatz kommen.
Wenn Kenngrößen der zur Korrektur des Druckbildes notwendigen Farbmenge direkt also beispielsweise on-line an eine Farbmischvorrichtung übermittelt werden, kann die Farbmischvorrichtung zeitnah reagieren. Mit Kenngrößen der notwendigen Farbmenge kann gemeint sein, dass die Steuer- und Regelvorrichtung der Druckmaschine direkt die genaue Farbmenge und Farbzusammensetzung an die Farbmischvorrichtung weiterleitet und auf diese Weise eine genaue Bestellung aufgibt.
Zur Mischung von Farben beim Verpackungsmittelhersteller könnten jedoch auch Farbmischvorrichtungen eingesetzt werden, welche Farbe mit den gewünschten Eigenschaften aus einer Vielzahl von Farb- und Farbrestbeständen mischen.
Diese Mischvorrichtungen müssten dann in die Lage versetzt werden, bereits gemischte Farbe, welche bei bereits erledigten Druckvorgängen übrig geblieben ist, zu speichern, in ihrer Zusammensetzung zu erfassen und bei der Mischung neuer Farbe wieder zu verwenden.
Auf diese Weise wären bedeutende Farbeinsparungen realisierbar. Insbesondere wenn solche Farbmischvorrichtungen in großen Verpackungsmittelfirmen zur Farbmischung für eine Vielzahl von Druckmaschinen eingesetzt werden, ist es sinnvoll, die Farbmischvorrichtung mit einer eigenen Steuer- und Regeleinheit zu versehen.
Dieser Steuer- und Regeleinheit sind dann die gespeicherten Farbmengen bekannt und die Steuer- und Regeleinheit der Druckmaschine teilt der Steuer- und Regeleinheit der Farbmischvorrichtung lediglich Kenngrößen der zur Korrektur des Druckbildes notwendigen Farbmenge - wie resultierender Farbton und Farbmenge - mit.

Die Steuer- und Regeleinheit der Farbmischvorrichtung entscheidet dann, aus welchen Farbbeständen sie die gewünschte Farbmenge zusammensetzt.

Insbesondere wenn die Farbmischvorrichtung über keine eigene Steuereinrichtung verfügt, die die obengenannten Tätigkeiten ausführen kann, ist es vorteilhaft, wenn der Steuer- und Regelvorrichtung der Druckmaschine die in der Farbmischvorrichtung gespeicherten Farbmengen und ihre Zusammensetzung bekannt sind. Unter anderem zu diesem Zweck können Druckmaschine und Farbmischvorrichtung miteinander vernetzt sein. Die Steuer- und Regelvorrichtung der Druckmaschine kann dann alle zur Farbmischung nötigen Steuersignale bereitstellen.
Neben einer engen Vernetzung der Steuer- und Regelvorgänge im Bereich des Drucks und der Farbmischung ist die direkte Vernetzung der Farbleitungssysteme vorteilhaft.
Die Aufnahme beziehungsweise Kontrolle des Druckbildes kann mit verschiedenen Vorrichtungen vorgenommen werden. Diese Vorrichtungen können so gestaltet sein, dass eine relativ gleichmäßige spektrale Empfindlichkeit über weite Bereiche der Wellenlänge elektromagnetischer Strahlung - und hier natürlich insbesondere des Bereichs des sichtbaren Lichts - aufweisen. Es ist jedoch auch möglich, lediglich engere ausgewählte Bereich des Spektrums zu untersuchen. In der Regel werden in beiden Fällen sogenannte digitale Kameras zum Einsatz kommen, in welchen das vom Druckbild reflektierte Licht lichtempfindlichen Halbleiterelementen zugeführt wird. Häufig werden in einer solchen Vorrichtung drei verschiedene Halbleiterbausteine verwendet, welche das Maximum ihrer Lichtempfindlichkeit in verschiedenen Wellenlängenberichen (vorzugsweise rot, gelb, blau) haben.
Zur Auswertung des vom Druckbild reflektierten Lichts eignen sich jedoch auch Vorrichtungen bei welchen Monochromatoren oder Polychromatoren das Licht spektral aufspalten und lichtempfindlichen Messsensoren wie z. B. Photomultipliern zuführen.
Bei einer Messvorrichtung der letztgenannten Art könnte das analoge Ausgangssignal der Photomultiplier beispielsweise an die Steuer- und Regelvorrichtung weitergegeben werden und erst dort einer Analog-DigitalWandlung unterzogen werden.
In jedem der geschilderten Fälle ist es vorteilhaft, wenn die Aufnahme des Druckbildes unter weitgehend gleichbleibenden Bedingungen stattfindet, so dass die Störgrößen, die insbesondere durch die Schwankungen des Umgebungslichtes eingetragen werden, minimiert werden.
Zu diesem Zweck kann die Druckbahn einen Kasten durchlaufen, der das Druckbild weitgehend vom Umgebungslicht abschirmt und der gleichzeitig die Vorrichtung zum spektralen Erfassen des Druckbildes und gegebenfalls geeignete Lichtquellen enthält.
Eine andere Möglichkeit zum Herstellen gleichbleibender Bedingungen besteht darin, die Druckbahn am Ort der Erfassung des Druckbildes mit Licht starker Intensität zu beleuchten. Bei diesem Licht kann es sich um weißes Licht handeln. Es ist jedoch auch möglich, Lichtquellen zu verwenden, welche Licht in den Wellenlängenbereichen emittieren, die von der Messvorrichtung gemessen werden. Auch in diesen beiden Fällen würde das Verhältnis der Störgrößen zu den Messgrößen wesentlich verbessert.
In allen geschilderten Fällen ist es vorteilhaft, wenn während des Messvorganges Licht möglichst gleichbleibender Intensität verwendet wird.

Bereits bei der spektralen Beschaffenheit aufeinanderfolgender Druckbilder können Schwankungen auftreten. Dieser Umstand ist in der Regel nicht auf instantane Schwankungen der Eigenschaften der Druckfarbe, sondern auf mechanische Ungenauigkeiten - wie sogenannte Registerfehler, die insbesondere bei mehren Druckwerken auftreten - zurückzuführen. Solche Schwankungen können durch eine Durchschnittsbildung anhand mehrerer Druckbilder ausgemittelt werden.

Bei einem kompletten Rüstvorgang an einer Verpackungsdruckmaschine, der beispielsweise nach einem Klischeewechsel an einer Flexodruckmaschine notwendig wird, müssen die Positionen der am Druck- und Einfärbeprozess beteiligten Walzen erneut zueinander eingestellt werden. Auch dieser Prozess, der in Regel der Einstellung der Farbmengen und Zusammensetzungen vorausgeht, ist aufwändig.
In der beim Deutschen Patentamt eingereichten, unveröffentlichten Anmeldung mit dem Aktenzeichen 101 45 957.2 wird ausführlich beschrieben, wie sich diese Einstellung effizienter handhaben lässt. Auf diese Anmeldung wird hier bezug genommen.
Bei der Einstellung der Walzenposition können die Druckbilder von derselben Vorrichtung zur Erfassung des Druckbildes erfasst werden, wie bei der Einstellung der Farbmenge und -zusammensetzung. Es kann auch auf die Speicher- und Rechenkapazität einer Steuer- und Recheneinheit zurückgegriffen werden. In der Regel wird die Anstellung der Druckwalzen gegeneinander der genauen Optimierung der Farbzusammensetzung vorausgehen. Insbesondere bei sich ändernden Viskositäts, Athäsions- oder Hafteigenschaften der Farbe während der Optimierung ihrer Zusammensetzung ist jedoch auch denkbar, die Walzenpositionen auch während des Druckprozesses zu überprüfen. Auch die Abnutzung beispielsweise der Klischees im Druckprozess kann solche Maßnahmen erforderlich machen.

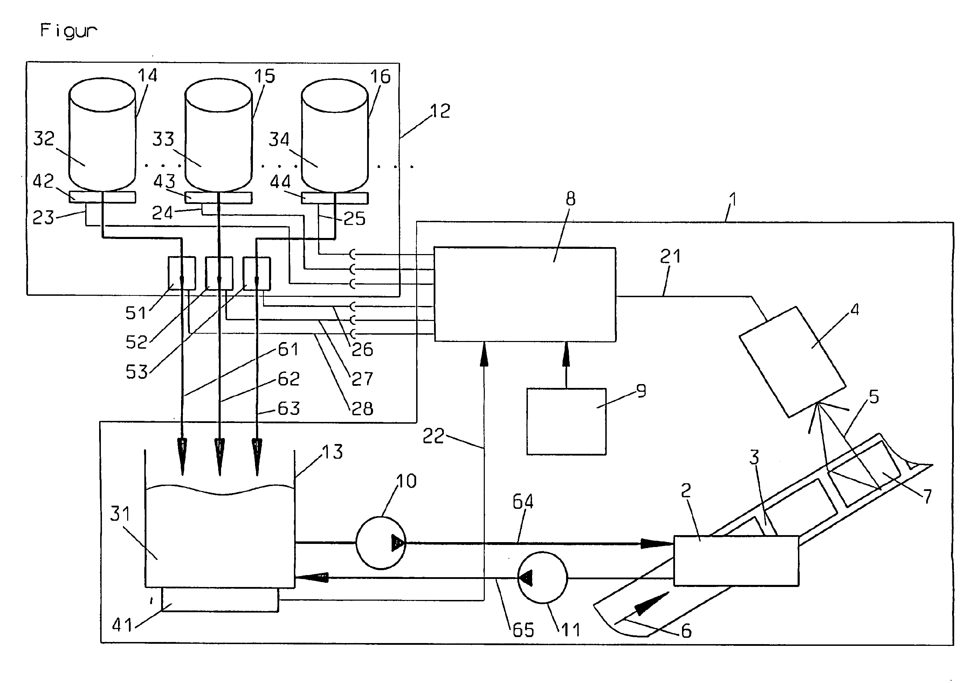

Weitere vorteilhafte Ausführungsformen und Ausführungsbeispiele der Erfindung ergeben sich aus den weiteren Ansprüchen, der gegenständlichen Beschreibung und der Zeichnung.

Die Figur zeigt einen schematischen Aufbau eines Ausführungsbeispiels der Erfindung, wobei nur ein Druckwerk dargestellt ist.

Die Figur zeigt ein Schema einer Flexo- oder Tiefdruckmaschine 1, welche vorzugsweise im Verpackungsdruck eingesetzt wird. Das Farbwerk 2 der Druckmaschine 1 bedruckt die Materialbahn 3, bei welcher es sich um-eine Kunstoff- oder Papierbahn handeln kann. Die Materialbahn durchläuft die Druckmaschine 1 in Richtung des Pfeils 6, so dass sie nach dem Druckprozess im Farbwerk 2 an dem Spektralsensor 4 vorbeiläuft. Das von dem Druckbild 7 auf der Bahn 3 reflektierte Licht wird durch den Lichtkegel 5 dargestellt.
Die Ausgangssignale des Spektralsensors 4 werden über die Datenleitung 21 dem Rechner 8 zugeführt. In dem Rechner ist die digitalisierte Sollform des Druckbildes abgelegt. Das Ablegen dieser Sollform kann durchgeführt werden, indem das Muster 9 extern oder durch eine geeignete Vorrichtung der Druckmaschine 1 spektral untersucht und der Steuer und Regeleinheit 8 zugeführt wird. In Zukunft werden immer mehr Muster vor Beginn des Druckprozesses lediglich in digitaler Form vorhanden sein und beispielsweise per E-Mail von dem Auftraggeber des Verpackungsmittelherstellers übermittelt.
In der Rechen- und Steuereinheit wird das Sollbild mit den Messwerten des Spektralsensors verglichen. Um die zur Korrektur des Druckbildes 7 notwendige Farbmenge zur ermitteln, fragt die Steuer- und Regeleinheit 8 die in der Druckmaschine noch vorhandene Farbmenge von der Waage 41 der Druckmaschine 1 über die Datenleitung 22 ab.
Die Zusammensetzung der im Farbbehälter 13 enthaltenen Farbe 31 ist der Steuer- und Recheneinheit 8 bekannt, da in der Steuer- und Recheneinheit auch alle früheren Farbeinträge in den Farbbehälter 11 gespeichert wurden.
Die Steuer- und Messvorrichtung 8 fragt auch die Menge der in den Farbbehältern 14 bis 16 enthaltenen Farbe 32 bis 34 ab. Im dargestellten Ausführungsbeispiel wird die Farbmenge in der Farbmischvorrichtung 12 von Waagen oder Füllstandsmessern 42 bis 44 aufgezeichnet und über die Datenleitungen 23 bis 25 übertragen.
In der Praxis können Farbmischvorrichtungen über wesentlich mehr Farbbehälter verfügen. Dieser Umstand ist durch die Punkte zwischen den Farbbehältern 14 bis 16 angedeutet.
Auf der Basis aller gewonnen Messwerte errechnet die Steuer- und Regeleinheit 8 die Menge und Zusammensetzung der zur Korrektur des Druckbildes benötigten Farbmenge und steuert die Ventile 51 bis 53 der Farbleitungen 61 bis 63 dementsprechend an. Die Farbe gelangt in den Farbbehälter 13 der Druckmaschine 1, vermischt sich mit der Restfarbe 31 und wird schließlich von der Pumpe 10 über die Farbleitung 64 dem Farbwerk 2 zugeführt. Nun wird ein korrigiertes Druckbild 7 auf die Materialbahn 3 gedruckt.
Zu erwähnen ist noch die Farbrückführungsleitung 65, durch welche von der Pumpe 11 Farbe aus dem Farbwerk in den Farbbehälter 13 zurückgepumpt wird.

| **Bezugszeichenliste** | |
|---|---|
| 1 | Flexo- oder Tiefdruckmaschine |
| 2 | Farbwerk |
| 3 | Materialbahn |
| 4 | Spektralsensor |
| 5 | Lichtkegel |
| 6 | Pfeil |
| 7 | Druckbild |
| 8 | Steuer und Regeleinheit/Rechner |
| 9 | Muster |
| 10 | Pumpe (Vorlauf) |
| 11 | Pumpe (Rücklauf) |
| 12 | Farbmischvorrichtung |
| 13 | Farbbehälter der Druckmaschine |
| 14 | Farbbehälter der Farbmischvorrichtung |
| 15 | Farbbehälter der Farbmischvorrichtung |
| 16 | Farbbehälter der Farbmischvorrichtung |
| | |
| 21-28 | Datenleitung |
| | |
| 31-34 | Farbe |
| | |
| 41- 44 | Waage bzw. Füllstandsmesser |
| | |
| 51-53 | Ventile |
| | |
| 61-65 | Farbleitungen |

## Patentansprüche

1. Verpackungsdruckmaschine (1) mit zumindest einem Farbwerk (2), bei der das Druckbild (7) durch die Zufuhr geeigneter Farbe und Farbmengen (31-34) nach einem Sollbild (9) einstellbar ist,
wobei die Verpackungsdruckmaschine folgende Merkmale enthält:
- Vorrichtungen (4) zum Erfassen des Druckbildes (7), welche Druckbilder (7) auf der Bedruckstoffbahn (3) erfassen und einer Steuer- und Regeleinheit (8) zuführen,
- eine Steuer- und Regeleinheit (8), welche einen Vergleich zwischen der digitalisierten Sollform des Druckbildes (7), welche in der Steuer- und Regeleinheit (8) abgelegt ist und dem Druckbild durchführt,
- Mittel zur Weitergabe oder Weiterverwertung der Vergleichswerte,
- Mittel zum Errechnen einer zur Korrektur des Druckbildes (7) notwendigen Farbmenge und Zusammensetzung, welche der Steuer- und Regeleinheit (8) zugeordnet sind,
**gekennzeichnet durch**
- Vorrichtungen (41), mit welchen das Farbvolumen oder die Farbmasse der im Farbbehälter (13) der Druckmaschine noch enthaltenen, zusammengesetzten Farbe feststellbar und der Steuer- und Regeleinheit (8) übermittelbar ist,
- und daß die Steuer- und Regeleinheit (8) derart eingerichtet ist, dass sie diese Farbvolumen- oder die Farbmassewerte bei der Ermittlung der zur Korrektur des Druckbildes notwendigen Farbmenge und -Zusammensetzung berücksichtigt.

2. Verpackungsdruckmaschine (1) nach Anspruch 1,
**dadurch gekennzeichnet, dass**
die Vorrichtungen (4) zum Erfassen des Druckbildes das Druckbild (7) in digitaler Form an die Regel- und Steuereinheit (8) weiterleiten.

3. Verpackungsdruckmaschine (1) nach einem der vorstehenden Ansprüche,
**dadurch gekennzeichnet, dass**
die Verpackungsdruckmaschine (1) mit Vorrichtungen ausgestattet ist, welche physikalische Kenngrößen der Farbe, wie ihre spektrale Zusammensetzung oder ihre Viskosität, feststellen und der Steuer- und Regeleinheit (8) melden.

4. Verpackungsdruckmaschine (1) nach einem der Ansprüche 3 bis 5,
**gekennzeichnet durch**
Kommunikationsmittel (23-25) zum direkten Übertragen einer zur Korrektur des Druckbildes (7) notwendigen Farbmenge und Zusammensetzung an eine Farbmischvorrichtung.

5. Verpackungsdruckmaschine (1) nach einem der vorstehenden Ansprüche,
**dadurch gekennzeichnet, dass**
der Steuer- und Regeleinrichtung (8) die in der Farbmischvorrichtung (12) vorhandenen Farbmengen bekannt sind, und dass diese Farbmengen bei der Berechnung einer zur Korrektur des Druckbildes (7) notwendigen Farbmenge berücksichtigt werden.

6. Verpackungsdruckmaschine (1) nach einem der vorstehenden Ansprüche,
**gekennzeichnet durch**
zumindest eine unmittelbare Verbindung (61-63) zur Überleitung von Farbe (32-34) von einer Farbmischvorrichtung (12) zu geeigneten Reservoirs (13) der Verpackungsdruckmaschine (1).

7. Verpackungsdruckmaschine (1) nach einem der vorstehenden Ansprüche,
**dadurch gekennzeichnet, dass**
die Vorrichtungen (4) zum Erfassen des Druckbildes (7) unterschiedliche Bereiche des Spektrums des vom Druckbild reflektierten Lichts (5) erfassen.

8. Verpackungsdruckmaschine (1) nach einem der vorstehenden Ansprüche,
**dadurch gekennzeichnet, dass**
die Vorrichtungen (4) zum Erfassen des Druckbildes das Druckbild (7) unter gleichbleibenden Bedingungen erfassen.

9. Verpackungsdruckmaschine nach einem der vorstehenden Ansprüche,
**dadurch gekennzeichnet, dass**
die Vorrichtungen (4) zum Erfassen des Druckbildes so angeordnet sind, dass sie das Druckbild (7) nach dem Durchlaufen sämtlicher Farbwerke (2) aufzeichnen.

10. Verpackungsdruckmaschine (1) nach einem der vorstehenden Ansprüche,
**dadurch gekennzeichnet, dass**
die Steuer- und Regeleinrichtung (8) einen aus mehreren Druckbildern (7) gebildeten Durchschnittswert mit einem digitalisierten Sollwert vergleicht.

11. Verfahren zum Betreiben einer Verpackungsdruckmaschine (1) mit zumindest einem Farbwerk (2),
bei dem das Druckbild (7) durch die Zufuhr geeigneter Farbe und Farbmengen (31-34) nach einem Sollbild (9) eingestellt wird,
und bei dem folgende Verfahrensmerkmale auftreten:
- Erfassen des Druckbildes mit Vorrichtungen (4) zum Erfassen des Druckbildes, welche Druckbilder (7) auf der Bedruckstoffbahn (3) erfassen und einer Steuer und Regeleinheit (8) zuführen,
- Durchführen eines Vergleiches zwischen der digitalisierten Sollform des Druckbildes (7), welche in der Steuer- und Regeleinheit (8) abgelegt ist, und dem aufgenommenen Druckbild,
- Weitergabe oder Weiterverwertung der Vergleichswerte,
- Errechnen einer zur Korrektur des Druckbildes (7) notwendigen Farbmenge und Zusammensetzung,
- **dadurch gekennzeichnet, dass**
- das Farbvolumen oder die Farbmasse der im Farbbehälter (13) der Druckmaschine noch enthaltenen, zusammengesetzten Farbemittels Vorrichtungen (41) festgestellt und der Steuer- und Regeleinheit (8) übermittelt wird,
- und daß die Steuer- und Regeleinheit (8) diese Farbvolumen- oder die Farbrnassewerte bei der Ermittlung der zur Korrektur des Druckbildes notwendigen Farbmenge und -Zusammensetzung berücksichtigt.

12. Verfahren nach dem vorstehenden Anspruch
**dadurch gekennzeichnet, dass**
die Korrektur des Druckbildes (7) durch die Änderung der Menge und Zusammensetzung der Druckfarbe bei laufender Bedruckstoffbahn erfolgt.

13. Verfahren einem der vorstehenden Ansprüche
**dadurch gekennzeichnet, dass**
die Steuer- und Regeleinheit (8) vor oder während der automatischen Einstellung der Menge und Zusammensetzung der Farbe die Positionen der am Druck- und Einfärbeprozess beteiligten Walzen zueinander einstellt,
indem sie (8) den Stellantrieben der am Druckprozess beteiligten Walzen solange Steuersignale zuführt, bis oder wie das Druckbild ohne Flächenverlust abgebildet wird.

## Claims

1. Packaging machine (1) with at least one colour deck (2) at which the print layout (7) is adjustable by the supply of suitable colour and colour quantities (31 - 34) according to a set layout (9), the packaging machine comprises the following characteristics:
- devices (4) for the collection of the print layout (7) collecting print layouts (7) on the cloth width (3) and for transporting them to a control unit (8),
- a control unit (8) which executes a comparison of the digitalised set shape of the print layout (7) which is put in the control unit (8) and the print layout,
- means for the transfer or further utilisation of the reference values,
- means for the calculation of a colour quantity and composition required for correction of the print layout (7) which are allocated to the control unit (8),
**characterized by**
- devices (41) by means of which the colour volume or the colour lot of the colour still existing and composed in the colour tank (13) of the printing machine and which can be transferred to the control unit (8),
- and that the control unit (8) is shown in such a way that it considers these colour quantity values or the colour composition with the detection of the colour quantity and composition required for the correction of the print layout.

2. Packaging machine (1) according to claim 1,
**characterized by**
the devices (4) for the collection of the print layout transfer the print layout (7) in digital shape to the control unit (8).

3. Packaging machine (1) according to one of the preceding claims,
**characterized in that**
the packaging printing machine (1) is equipped with devices which determines the physical parameters of the colour like its spectral composition or its viscosity and gives notice to the control unit (8).

4. Packaging machine (1) according to one of the claims 3 to 5,
**characterized by**
communication media (23 - 25) for the direct transfer of a colour quantity and composition which is required for the correction of the print layout (7) at a colour mixing device.

5. Packaging machine (1) according to one of the preceding claims,
**characterized in that**
the control unit (8) knows the colour quantities existing in the colour mixing device (12) and that these colour quantities are considered on the calculation of a colour quantity required for the correction of the print layout.

6. Packaging machine (1) according to one of the preceding claims,
**characterized by**
at least a proximate connection (61 - 63) for transition of colour (32 - 34) of a colour mixing device (12) to suited colour tank (13) of the packaging machine (1).

7. Packaging machine (1) according to one of the preceding claims,
**characterized in that**
the devices (4) for the collection of the print layout collect different ranges of the spectrum of the light (5) reflected by the print layout.

8. Packaging machine (1) according to one of the preceding claims,
**characterized in that**
the devices (4) for the collection of the print layout collect the print layout (7) under constant conditions.

9. Packaging machine (1) according to one of the preceding claims,
**characterized in that**
the devices (4) for the collection of the print layout are arranged in such a way that they register the print layout (7) after having passed through all colour decks.

10. Packaging machine (1) according to one of the preceding claims,
**characterized in that**
the control unit (8) compares the average of several print layouts (7) with a digitalised setpoint.

11. Process for the operation of a packaging machine (1) with a least one colour deck (2), whereby the print layout (7) is adjusted by the supply of suitable colour and colour quantities (31 - 34) according to a set layout (9) comprising the following characteristics:
- collection of the print layout by devices (4) for the collection of the print layout which collects print layouts (7) at the web (3) and leads them to a control unit (8),
- execution of a comparison between the digitalised set shape of the print layout (7) which is deposited in the control unit (8) and the registered print layout,
- transfer or reclamation of the comparative values,
- calculation of a colour quantity and composition required for the correction of the print layout (7),
**characterized in that**
- the colour volume or the colour mass of the composed colour which is still contained in the colour tank (13) by devices (41) is determined and transferred to the control unit (8),
- and that the control unit (8) considers these colour volumes or the colour mass values on the determination of the colour quantity and composition required for the correction of the print layout.

12. Process according to the preceding claim,
**characterized in that**
the correction of the print layout (7) is executed by the alteration of the quantity and composition of the print colour with running web.

13. Process according to one of the preceding claims,
**characterized in that**
the control unit (8) adjusts the positions of the valves engaged in the printing- and inking process to each other before or during the automatic adjustment of the quantity and composition of the colour,
by leading control signals to the valves engaged in the printing process until or as long as the print layout is reproduced without area loss.

## Revendications

1. Machine d'impression d'emballages (1) avec au moins un mécanisme d'encrage (2), dans laquelle l'image d'impression (7) est réglable par l'amenée d'une couleur appropriée et de quantités de couleur (31-34) selon une image de consigne (9),
la machine d'impression d'emballages ayant les caractéristiques suivantes:
- des dispositifs (4) pour détecter l'image d'impression (7), qui détectent les images d'impression (7) sur la bande de matériau d'impression (3) et les amènent à une unité de commande et de régulation (8),
- une unité de commande et de régulation (8) qui exécute une comparaison entre la forme de consigne numérisée de l'image d'impression (7), qui est stockée dans l'unité de commande et de régulation (8) et l'image d'impression,
- des moyens pour la transmission ou l'utilisation subséquente des valeurs de comparaison,
- des moyens pour le calcul d'une quantité de couleur et composition nécessaires à la correction de l'image d'impression (7), qui sont associés à l'unité de commande et de régulation (8),
**caractérisée par**
- des dispositifs (41) au moyen desquels le volume de couleur ou la masse de couleur de la couleur composée, se trouvant encore dans le contenant de couleur (13) de la machine d'impression, peut être déterminé et peut être transmis à l'unité de commande et de régulation (8),
- et en ce que l'unité de commande et de régulation (8) est conçue de façon à prendre en considération ces valeurs de volume de couleur ou de masse de couleur lors de la détermination de la quantité et composition de couleur nécessaire pour la correction de l'image d'impression.

2. Machine d'impression d'emballages (1) selon la revendication 1, **caractérisée en ce que** les dispositifs (4) pour la détection de l'image d'impression transmettent l'image d'impression (7) sous forme numérique à l'unité de régulation et de commande (8).

3. Machine d'impression d'emballages (1) selon l'une des revendications précédentes, **caractérisée en ce que** la machine d'impression d'emballages (1) est équipée de dispositifs qui déterminent des grandeurs caractéristiques physiques de la couleur, comme sa composition spectrale ou sa viscosité et les signalent à l'unité de commande et de régulation (8).

4. Machine d'impression d'emballages (1) selon l'une des revendications 3 à 5, **caractérisée par** des moyens de communication (23-25) pour la transmission directe d'une quantité et composition de couleur nécessaire pour la correction de l'image d'impression (7) à un dispositif de mélange de couleurs.

5. Machine d'impression d'emballages (1) selon l'une des revendications précédentes, **caractérisée en ce que** l'installation de commande et de régulation (8) connaît les quantités de couleurs présentes dans le dispositif de mélange de couleurs (12), et **en ce que** ces quantités de couleurs sont pris en considération lors du calcul d'une quantité de couleurs nécessaire pour la correction de l'image d'impression (7).

6. Machine d'impression d'emballages (1) selon l'une des revendications précédentes, **caractérisée par** au moins une liaison directe (61-63) pour transférer de la couleur (32-34) d'un dispositif de mélange de couleurs (12) à des réservoirs appropriés (13) de la machine d'impression d'emballages (1).

7. Machine d'impression d'emballages (1) selon l'une des revendications précédentes, **caractérisée en ce que** les dispositifs (4) pour la détection de l'image d'impression (7) détectent des zones différentes du spectre de la lumière (5) réfléchie par l'image d'impression.

8. Machine d'impression d'emballages (1) selon l'une des revendications précédentes, **caractérisée en ce que** les dispositifs (4) pour la détection de l'image d'impression détectent l'image d'impression (7) sous des conditions constantes.

9. Machine d'impression d'emballages selon l'une des revendications précédentes, **caractérisée en ce que** les dispositifs (4) pour la détection de l'image d'impression sont disposés de façon à enregistrer l'image d'impression (7) après le passage à travers tous les mécanismes d'encrage (2).

10. Machine d'impression d'emballages (1) selon l'une des revendications précédentes, **caractérisée en ce que** l'installation de commande et de régulation (8) compare une valeur moyenne formée à partir de plusieurs images d'impression (7) avec une valeur de consigne numérisée.

11. Procédé de fonctionnement d'une machine d'impression d'emballages (1) avec au moins un mécanisme d'encrage (2), dans lequel l'image d'impression (7) est réglée par l'amenée d'une couleur et de quantités de couleurs appropriées (31-34) selon une image de consigne (9), présentant les caractéristiques de procédé suivantes:
- la détection de l'image d'impression avec des dispositifs (4) pour la détection de l'image d'impression, qui détectent des images d'impression (7) sur la bande de matériau d'impression (3) et les transmettent à une unité de commande et de régulation (8),
- exécution d'une comparaison entre la forme de consigne numérisée de l'image d'impression (7) qui est stockée dans l'unité de commande et de régulation (8) et l'image d'impression prise,
- transfert ou utilisation subséquente des valeurs de comparaison,
- calcul d'une quantité et composition de couleur nécessaire pour la correction de l'image d'impression (7),
**caractérisé en ce que**
- le volume de couleur ou la masse de couleur de la couleur composée, se trouvant encore dans le contenant de couleur (13) de la machine d'impression, sont constatés au moyen de dispositifs (41) et sont transmis à l'unité de commande et de régulation (8),
- et **en ce que** l'unité de commande et de régulation (8) prend en considération ces valeurs de volume de couleur ou de masse de couleur lors de la détermination de la quantité et composition de couleur nécessaire pour la correction de l'image d'impression.

12. Procédé selon la revendication précédente, **caractérisé en ce que** la correction de l'image d'impression (7) a lieu par la modification de la quantité et de la composition de la couleur d'impression pendant que la bande de matériau d'impression est en mouvement.

13. Procédé selon l'une des revendications précédentes, **caractérisé en ce que** l'unité de commande et de régulation (8) avant ou pendant le réglage automatique de la quantité et de la composition de couleur règle les positions respectives des cylindres participant au processus d'impression et de coloration, en transmettant (8) aux commandes de positionnement des cylindres participant au processus d'impression des signaux de commande aussi longtemps jusqu'à ce que l'image d'impression soit représentée sans perte de face.
